# EUROPÄISCHE PATENTSCHRIFT

(11) **EP 1 676 761 B1**
(45) Veröffentlichungstag und Bekanntmachung des Hinweises auf die Patenterteilung: **17.02.2010**
(21) Anmeldenummer: 05110271.3
(22) Anmeldetag: 02.11.2005
(51) Int. Cl.: B60S 1/04

(54) **Scheibenwischvorrichtung**
Windscreen wiper device
Dispositif d'essuie-glace

(30) Priorität: 29.12.2004 DE 102004063177
(43) Veröffentlichungstag der Anmeldung: 05.07.2006
(73) Patentinhaber: ROBERT BOSCH GMBH, 70442 Stuttgart (DE)
(72) Erfinder: Hawighorst, Achim, 77830, Buehlertal (DE)

(56) Entgegenhaltungen:
- PATENT ABSTRACTS OF JAPAN Bd. 1997, Nr. 05, 30. Mai 1997 (1997-05-30) -& JP 09 024800 A (ASMO CO LTD), 28. Januar 1997 (1997-01-28)
- PATENT ABSTRACTS OF JAPAN Bd. 1997, Nr. 07, 31. Juli 1997 (1997-07-31) -& JP 09 066805 A (JIDOSHA DENKI KOGYO CO LTD), 11. März 1997 (1997-03-11)
- PATENT ABSTRACTS OF JAPAN Bd. 1999, Nr. 12, 29. Oktober 1999 (1999-10-29) -& JP 11 189130 A (SUZUKI MOTOR CORP), 13. Juli 1999 (1999-07-13)
- PATENT ABSTRACTS OF JAPAN Bd. 1999, Nr. 04, 30. April 1999 (1999-04-30) -& JP 11 020620 A (ASMO CO LTD), 26. Januar 1999 (1999-01-26)

## Beschreibung

Die Erfindung betrifft eine Scheibenwischvorrichtung, insbesondere für ein Kraftfahrzeug, mit einem Wischermotor und einem zwischen dem Wischermotor und einer Karosserie angeordnetem Montageelement.

Bisher ist es üblich, Wischermotore mit Schrauben an der Karosserie zu befestigen. Diese Art der Montage ist jedoch aufwändig und somit zeitintensiv.

Die JP 11189130A betrifft eine Scheibenwischvorrichtung für ein Kraftfahrzeug, mittels der ein Scheibenwischer gelenkig mit einer Fahrzeugkarosserie verbindbar ist. Die Scheibenwischvorrichtung umfasst ein Montageelement, welches durch eine lineare Steckbewegung in eine für das Montageelement vorgesehene Öffnung in der Fahrzeugkarosserie steckbar ist. Das Montageelement umfasst zwei gegenüberliegende Zapfen mit einem Außengewinde, die beim Einstecken des Montageelements in die Öffnung der Karosserie jeweils durch ein für einen Zapfen in der Karosserie vorgesehenes Loch hindurchgreifen. Durch Aufschrauben einer Mutter auf jeweils einen der Zapfen wird das Montageelement an der Karosserie befestigt. Des Weiteren umfasst das Montageelement ein Federelement, welches beim Einstecken des Montageelementes in die Öffnung der Karosserie in einer Endstellung einrastet und die Karosserie im Randbereich der Öffnung hintergreift.

Die Erfindung löst die gestellte Aufgabe durch eine Scheibenwischvorrichtung der eingangs genannten Art, bei der erfindungsgemäß das Montageelement ein Gewinde aufweist, wodurch das Montageelement durch eine Umdrehung des Montageelements von höchstens 120 Grad in die Karosserie einschraubbar ist. Ferner weist das Montageelement mindestens ein Rastelement auf, das in der Endstellung des Montageelements in die Karosserie eingerastet, was vorzugsweise durch einen Formschluss erreicht werden kann. Durch das Gewinde wird das Montageelement an der Karosserie befestigt. Die Rastelemente hingegen sichern das Montageelement in seiner Endstellung, so dass es durch Erschütterungen und dergleichen nicht von der Karosserie gelöst werden kann. Somit kann der Wischermotor zusammen mit dem daran befindlichen Montageelement mit einem Handgriff an der Karosserie befestigt werden. Die bisher erforderlichen Schrauben und die damit verbundenen Montageschritte können also zukünftig entfallen.

Damit die Rastelemente in der Endstellung des Montageelements in die Karosserie einrasten können, können in der Karosserie Rastöffnungen und/oder Vertiefungen zur Aufnahme der Rastelemente vorgesehen sein.

Um den Motor zur Resonanzentkopplung in einem bestimmten Abstand zur Karosserie montieren zu können, kann das Montageelement Distanzelemente aufweisen.

In einer sehr einfachen und somit kostengünstigen Konstruktion können die Rastelemente ein an den Distanzelementen angebrachter formschlüssig in die Rastöffnungen und/oder Vertiefungen eingreifender Fortsatz sein.

In einer ebenfalls sehr einfachen Konstruktion können die Rastelemente und die Distanzelemente einstückig ausgebildet sein. Wenn das Montageelement in die in der Karosserie befindliche Öffnung eingeschraubt wird, entsteht in dem Montageelement eine Vorspannung, solange die bolzenförmigen Fortsätze gegen die Karosserie gedrückt werden und noch nicht in die Rastöffnungen und/oder Vertiefungen in der Karosserie eingerastet sind. Die Vorspannung drückt die bolzenförmigen Fortsätze in die Rastöffnungen und/oder Vertiefungen, sobald das Montageelement seine Endstellung erreicht hat.

In einer anderen Ausführungsvariante können die Rastelemente beweglich in Bohrungen, die in den Distanzelementen vorgesehen sind, angeordnet sein. Wenn das Montageelement in die in der Karosserie befindliche Öffnung eingeschraubt wird, werden die Rastelemente von der Karosserie solange in die Bohrungen gedrückt bis das Montageelement seine Endstellung erreicht hat.

Damit die Rastelemente in der Endstellung in die Rastöffnungen und/oder die Vertiefungen einrasten können, können die Rastelemente durch Federn bewegt werden.

Um das Montageelement in die Karosserie einschrauben zu können, kann die Karosserie eine Öffnung mit einem eingeschnittenen Gewinde aufweisen.

In einer anderen Ausführungsform ist es jedoch auch möglich, dass die Karosserie eine Öffnung mit einem Gewindeeinsatz aufweist, um das Montageelement in die Karosserie einschrauben zu können.

Um Motorvibrationen nicht auf die Karosserie zu übertragen, kann mindestens ein Entkopplungselement zwischen dem Wischermotor und dem Montageelement angebracht sein.

Zum Toleranzausgleich kann zwischen der Karosserie und dem Montageelement ein Federelement angeordnet sein.

Zur leichten und schnellen Montage weist das Montageelement eine Öffnung auf, durch die eine Antriebswelle gesteckt werden kann.

Zweckmäßigerweise ist der Wischermotor an das Montageelement anschraubbar.

Nachfolgend werden verschiedene Ausführungsbeispiele anhand der beiliegenden Zeichnungen näher erläutert.

### Im Einzelnen zeigen:

- Fig. 1: eine Schnittansicht durch eine erste Ausführungsform eines Montageelements;
- Fig. 2: eine Schnittansicht durch eine zweite Ausführungsform des Montageelements;
- Fig. 3: eine Draufsicht auf das Montageelement aus Fig. 2;
- Fig. 4.: eine Schnittansicht durch eine dritte Ausführungsform des Montageelements;
- Fig. 5: eine Schnittansicht durch eine vierte Ausführungsform des Montageelements.

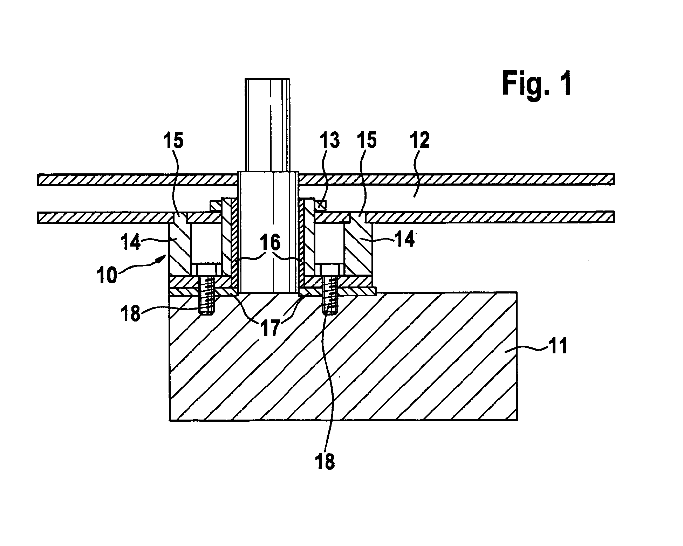

Fig. 1 zeigt ein Montageelement 10, das zwischen einem Wischermotor 11 und einer Karosserie 12 angeordnet ist. Das Montageelement 10 ist durch eine Öffnung in der Karosserie 12 gesteckt. An der Karosserie 12 ist ein Gewindeeinsatz 13 vorgesehen, in den das Montageelement 10 mit einem Außengewinde in die Karosserie 12 eingeschraubt wird.

Das Montageelement 10 weist Distanzelemente 14 auf, die den Wischermotor 11 in einem bestimmten Abstand zu Karosserie 12 halten.

Auf den Distanzelementen 14 sind als bolzenförmige Fortsätze ausgebildete Rastelemente 15 angebracht, die in Rastöffnungen, die in der Karosserie 12 vorgesehen sind, einrasten, sobald das Montageelement seine Endstellung erreicht hat. Die Verrastung gewährleistet, dass sich das Montageelement 10 durch Erschütterungen und dergleichen nicht von der Karosserie 12 lösen kann.

Die Distanzelemente 14 und die Rastelemente 15 sind einstückig ausgebildet. Wenn das Montageelement 10 in die Karosserie 12 eingeschraubt wird, entsteht folglich in dem Montageelement 10 eine Vorspannung, solange die Rastelemente 15 gegen die Karosserie 12 gedrückt werden und noch nicht in die Rastöffnungen in der Karosserie 12 eingerastet sind. Die Vorspannung drückt die Rastelemente 15 in die Rastöffnungen, sobald das Montageelement 10 seine Endstellung erreicht hat.

Zwischen dem Wischermotor 11 und dem Montageelement 10 sind Entkopplungselemente 16 und 17 angeordnet, um eine Übertragung von Motorvibrationen auf die Karosserie 12 auszuschließen.

Das Montageelement 10 ist mit Schrauben 18 am Wischermotor 11 befestigt.

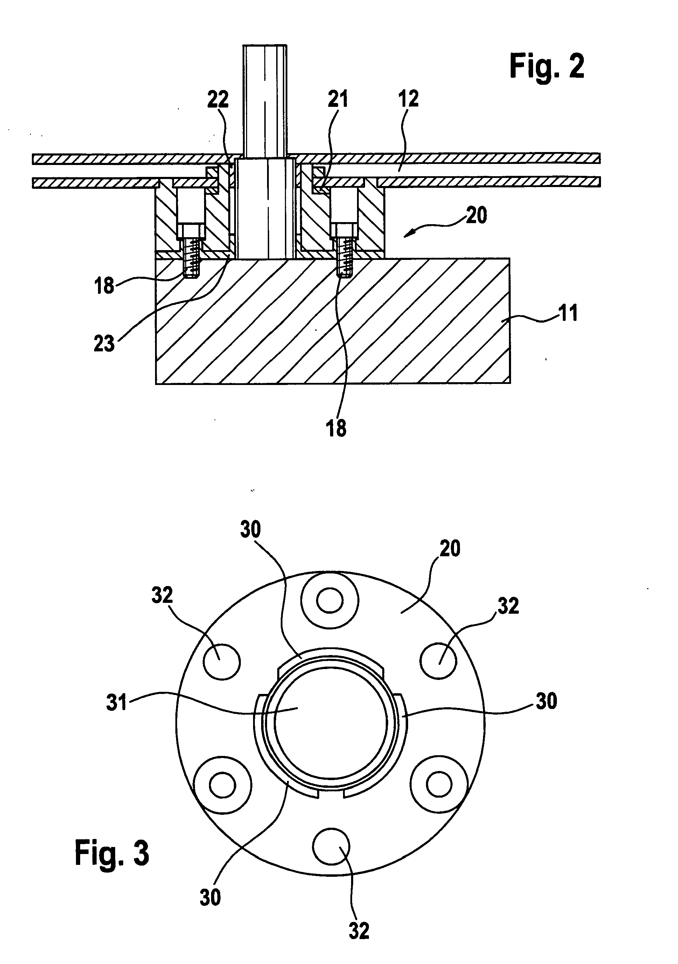

Fig. 2 zeigt ein Montageelement 20, zwischen dem und der Karosserie 12 ein Federelement 21 angeordnet ist. Das Federelement 21 gleicht Toleranzen zwischen der Karosserie 12 und dem Montageelement 20 aus.

Außerdem ist das Montageelement 20 mit zwei Entkopplungselementen 22 und 23 versehen.

An dem Montageelement 20 sind Außengewinde 30 angebracht, mit denen das Montageelement 20 in die Karosserie 12 eingeschraubt wird (siehe Fig. 3). Die Außengewinde 30 sind als Gewindesegmente mit wenigen Gängen ausgebildet. Somit bedarf es einer Umdrehung von höchstens 120 Grad durch das Montagepersonal, um das Montageelement 20 in die Karosserie 12 einzuschrauben.

Das Montageelement 20 weist eine Öffnung 31 auf, durch die eine Antriebswelle des Wischermotors 11 und/oder ein Bereich eines hier nicht näher dargestellten Getriebegehäuses gesteckt werden kann.

Ferner sind an dem Montageelement Bohrungen 32 zur Aufnahme der Schrauben 18 vorgesehen, um den Wischermotor 11 an dem Montageelement 20 zu befestigen.

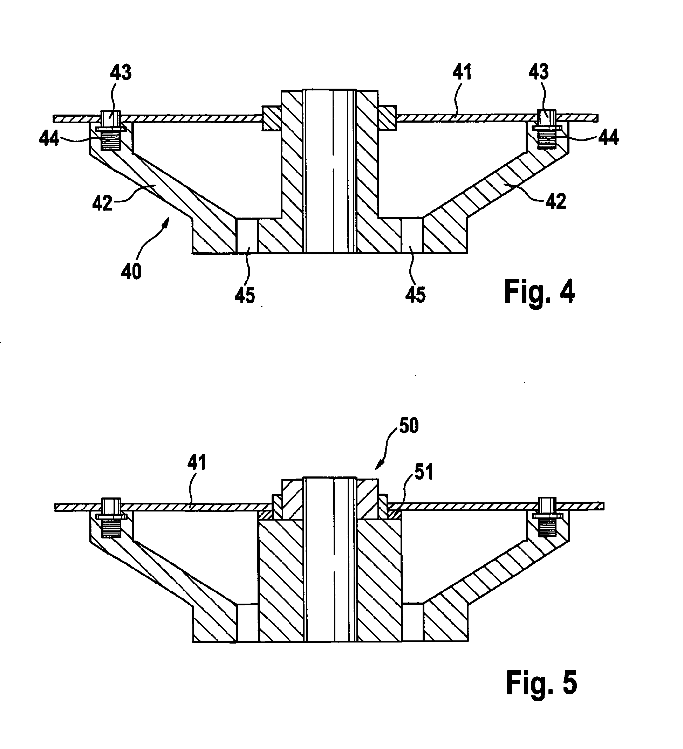

Fig. 4. zeigt ein Montageelement 40, das an einer Karosserie 41 angebracht ist. An dem Montageelement 40 sind Distanzelemente 42 vorgesehen, an deren Enden Rastelemente 43 angeordnet sind.

Die Rastelemente 43 werden mit Federn 44 in Rastöffnungen, die in der Karosserie 41 vorgesehen sind, gedrückt, sobald das Montageelement 40 seine Endstellung erreicht hat.

Das Montageelement 40 weist Bohrungen 45 auf, durch die Schrauben zur Befestigung des Wischermotors eingeführt werden können.

Fig. 5 zeigt ein Montageelement 50, das gegenüber dem Montageelement 40 mit einem Federelement 51 versehen ist, um Toleranzen zwischen der Karosserie 41 und dem Montageelement 50 auszugleichen.

## Patentansprüche

1. Scheibenwischvorrichtung, insbesondere für ein Kraftfahrzeug, mit einem Wischermotor (11) und einem zwischen dem Wischermotor (11) und einer Karosserie (12, 41) angeordnetem Montageelement (10, 20, 40, 50), und das Montageelement (10, 20, 40, 50) mindestens ein Rastelement (15, 43) aufweist, das in der Endstellung des Montageelements (10, 20, 40, 50) in die Karosserie (12,41) einrasten kann, **dadurch gekennzeichnet, dass** das Montageelement (10, 20, 40, 50) ein Gewinde (30) aufweist, durch welches das Montageelement (10, 20, 40, 50) durch eine Umdrehung das Montageelements (10, 20, 40, 50) von höchstens 120 Grad in die Karosserie (12, 41) einschraubbar ist, sodass der Wischermotor (11) zusammen mit dem daran befindlichen Montageelement (10, 20, 40, 50) an der Karosserie befestigt werden kann.

2. Scheibenwischvorrichtung nach Anspruch 1, **dadurch gekennzeichnet, dass** das Montageelement(10, 20, 40,50)Distanzelemente (14, 42) aufweist.

3. Scheibenwischvorrichtung nach Anspruch 2, **dadurch gekennzeichnet, dass** die Rastelemente (15, 43) ein an den Distanzelementen (14, 42) angebrachter formschlüssig in Rastöffnungen und/oder Vertiefungen eingreifender Fortsatz sind.

4. Scheibenwischvorrichtung nach Anspruch 3, **dadurch gekennzeichnet, dass** die Rastelemente (15) und die Distanzelemente (14) einstückig ausgebildet sind.

5. Scheibenwischvorrichtung nach Anspruch 3, **dadurch gekennzeichnet, dass** die Rastelemente (43) beweglich in Bohrungen, die in den Distanzelementen (42) vorgesehen sind, angeordnet sind.

6. Scheibenwischvorrichtung nach Anspruch 5, **dadurch gekennzeichnet, dass** die Rastelemente (43) durch Federn (44) bewegbar sind.

7. Scheibenwischvorrichtung nach einem der Ansprüche 1 bis 6, **dadurch gekennzeichnet, dass** in der Karosserie (12, 41) Rastöffnungen und/oder Vertiefungen zur Aufnahme der Rastelemente (15, 43) vorgesehen sind.

8. Scheibenwischvorrichtung nach einem der Ansprüche 1 bis 7, **dadurch gekennzeichnet, dass** die Karosserie (12, 41) eine Öffnung mit einem eingeschnittenen Gewinde aufweist.

9. Scheibenwischvorrichtung nach einem der Ansprüche 1 bis 7, **dadurch gekennzeichnet, dass** die Karosserie (12, 41) eine Öffnung mit einem Gewindeeinsatz (13) aufweist.

10. Scheibenwischvorrichtung nach einem der Ansprüche 1 bis 9, **dadurch gekennzeichnet**, das mindestens ein Entkopplungselement (16, 17, 22, 23) zwischen dem Wischermotor (11) und dem Montageelement (10, 20) angebracht ist.

11. Scheibenwischvorrichtung nach einem der Ansprüche 1 bis 10, **dadurch gekennzeichnet, dass** zwischen der Karosserie (12) und dem Montageelement (20) ein Federelement (eine 20) angeordnet ist.

12. Scheibenwischvorrichtung nach einem der Ansprüche 1 bis 11, **dadurch gekennzeichnet, dass** das Montageelement (10, 20, 40, 50) eine Öffnung (31) aufweist, durch die eine Antriebswelle durchsteckbar ist.

13. Scheibenwischvorrichtung nach einem der Ansprüche 1 bis 12, **dadurch gekennzeichnet, dass** der Wischermotor (11) an das Montageelement (10, 20, 40, 50) anschraubbar ist.

## Claims

1. Windscreen wiper device, in particular for a motor vehicle, having a wiper motor (11) and having a mounting element (10, 20, 40, 50) arranged between the wiper motor (11) and a body (12, 41), and the mounting element (10, 20, 40, 50) having at least one latching element (15, 43) which, in the end position of the mounting element (10, 20, 40, 50), can latch into the body (12, 41), **characterized in that** the mounting element (10, 20, 40, 50) has a thread (30) by means of which the mounting element (10, 20, 40, 50) can be screwed into the body (12, 41) by way of a rotation of the mounting element (10, 20, 40, 50) through at most 120 degrees, such that the wiper motor (11) together with the mounting element (10, 20, 40, 50) situated thereon can be fastened to the body.

2. Windscreen wiper device according to Claim 1, **characterized in that** the mounting element (10, 20, 40, 50) has spacer elements (14, 42).

3. Windscreen wiper device according to Claim 2, **characterized in that** the latching elements (15, 43) are a projection which is attached to the spacer elements (14, 42) and which engages in a positively locking manner in latching openings and/or depressions.

4. Windscreen wiper device according to Claim 3, **characterized in that** the latching elements (15) and the spacer elements (14) are formed in one piece.

5. Windscreen wiper device according to Claim 3, **characterized in that** the latching elements (43) are arranged in a movable fashion in bores which are provided in the spacer elements (42).

6. Windscreen wiper device according to Claim 5, **characterized in that** the latching elements (43) can be moved by springs (44).

7. Windscreen wiper device according to one of Claims 1 to 6, **characterized in that** latching openings and/or depressions for receiving the latching elements (15, 43) are provided in the body (12, 41).

8. Windscreen wiper device according to one of Claims 1 to 7, **characterized in that** the body (12, 41) has an opening with a thread cut therein.

9. Windscreen wiper device according to one of Claims 1 to 7, **characterized in that** the body (12, 41) has an opening with a threaded insert (13).

10. Windscreen wiper device according to one of Claims 1 to 9, **characterized in that** at least one decoupling element (16, 17, 22, 23) is attached between the wiper motor (11) and the mounting element (10, 20).

11. Windscreen wiper device according to one of Claims 1 to 10, **characterized in that** a spring element (21) is arranged between the body (12) and the mounting element (20).

12. Windscreen wiper device according to one of Claims 1 to 11, **characterized in that** the mounting element (10, 20, 40, 50) has an opening (31) through which a drive shaft can be inserted.

13. Windscreen wiper device according to one of Claims 1 to 12, **characterized in that** the wiper motor (11) can be screwed to the mounting element (10, 20, 40, 50).

## Revendications

1. Dispositif d'essuie-glace, en particulier pour un véhicule automobile, comprenant un moteur d'essuie-glace (11) et un élément de montage (10, 20, 40, 50) disposé entre le moteur d'essuie-glace (11) et une carrosserie (12, 41), l'élément de montage (10, 20, 40, 50) présentant au moins un élément d'encliquetage (15, 43) qui peut s'encliqueter dans la position d'extrémité de l'élément de montage (10, 20, 40, 50) dans la carrosserie (12, 41), **caractérisé en ce que** l'élément de montage (10, 20, 40, 50) présente un filetage (30), par lequel l'élément de montage (10, 20, 40, 50) peut être vissé dans la carrosserie (12, 41) par une rotation de l'élément de montage (10, 20, 40, 50) de 120 degrés au maximum, de sorte que le moteur d'essuie-glace (11) puisse être fixé à la carrosserie conjointement avec l'élément de montage (10, 20, 40, 50) disposé sur lui.

2. Dispositif d'essuie-glace selon la revendication 1, **caractérisé en ce que** l'élément de montage (10, 20, 40, 50) présente des éléments d'espacement (14, 42).

3. Dispositif d'essuie-glace selon la revendication 2, **caractérisé en ce que** les éléments d'encliquetage (15, 43) sont une saillie montée sur les éléments d'espacement (14, 42), s'engageant par coopération de forme dans des ouvertures d'encliquetage et/ou des renfoncements.

4. Dispositif d'essuie-glace selon la revendication 3, **caractérisé en ce que** les éléments d'encliquetage (15) et les éléments d'espacement (14) sont réalisés d'une seule pièce.

5. Dispositif d'essuie-glace selon la revendication 3, **caractérisé en ce que** les éléments d'encliquetage (43) sont disposés de manière mobile dans des alésages qui sont prévus dans les éléments d'espacement (42).

6. Dispositif d'essuie-glace selon la revendication 5, **caractérisé en ce que** les éléments d'encliquetage (43) peuvent être déplacés par des ressorts (44).

7. Dispositif d'essuie-glace selon l'une quelconque des revendications 1 à 6, **caractérisé en ce que** des ouvertures d'encliquetage et/ou des renfoncements sont prévus dans la carrosserie (12, 41) pour recevoir les éléments d'encliquetage (15, 43).

8. Dispositif d'essuie-glace selon l'une quelconque des revendications 1 à 7, **caractérisé en ce que** la carrosserie (12, 41) présente une ouverture avec un filetage entaillé.

9. Dispositif d'essuie-glace selon l'une quelconque des revendications 1 à 7, **caractérisé en ce que** la carrosserie (12, 41) présente une ouverture avec un insert fileté (13).

10. Dispositif d'essuie-glace selon l'une quelconque des revendications 1 à 9, **caractérisé en ce qu'**au moins un élément de désaccouplement (16, 17, 22, 23) est monté entre le moteur d'essuie-glace (11) et l'élément de montage (10, 20).

11. Dispositif d'essuie-glace selon l'une quelconque des revendications 1 à 10, **caractérisé en ce qu'**un élément de ressort (21) est disposé entre la carrosserie (12) et l'élément de montage (20).

12. Dispositif d'essuie-glace selon l'une quelconque des revendications 1 à 11, **caractérisé en ce que** l'élément de montage (10, 20, 40, 50) présente une ouverture (31), à travers laquelle un arbre d'entraînement peut être enfoncé.

13. Dispositif d'essuie-glace selon l'une quelconque des revendications 1 à 12, **caractérisé en ce que** le moteur d'essuie-glace (11) peut être vissé à l'élément de montage (10, 20, 40, 50).
